# EUROPÄISCHE PATENTANMELDUNG

(11) **EP 0 627 706 A2**
(43) Veröffentlichungstag der Anmeldung: **07.12.1994**
(21) Anmeldenummer: 94105478.5
(22) Anmeldetag: 08.04.1994
(51) Int. Cl.: G06K 17/00

(54) **Lage- und raumrichtungsabhängiger mobiler elektronischer Informationsgeber**

(30) Priorität: 08.04.1993 HU 9300101
(71) Anmelder: Nelhiebel, Stefan, D-81245 München (DE); Rancsik, Istvan, H-1143 Budapest XIV (HU)
(72) Erfinder: Rancsik, Istvan, H-1143 Budapest XIV (HU)
(74) Vertreter: Petra, Elke, Dipl.-Ing.

(57) **Zusammenfassung**

Die Erfindung betrifft einen lage- und raumrichtungsabhängigen mobilen elektronischen Informationsgeber, insbesondere für Informationssysteme in Ausstellungen oder für Verkehrsinformationssysteme, ggf. mit mit Kabeln angeschlossenen Teileinheiten, der aufweist: eine Empfangseinheit für den Identifikationscode mit einer ausgezeichneten Richtungsachse; einen Speicher für die Speicherung einer codierten audiovisuellen Information; eine akustische Tonwiedergabeeinheit, die über eine gesteuerte Tonmischanlage mit dem Ausgang des Speichers verbunden ist; eine mit ihrem Eingang am Ausgang der Empfangseinheit für den Identifikationscode angeschlossene zentrale logische Steuereinheit, die entsprechend dem in die Empfangseinheit für den Identifikationscode eingegebenen Identifikationscode eine codierte audiovisuelle Information auswählt und über ihre Ausgänge an die Eingänge der gesteuerten Tonmischanlage und des Speichers für die Steuerung der Mechanik angeschlossen ist, wobei der Ausgang des Speichers zur Steuerung der Mechanik am Eingang des Speichers angeschlossen ist; wobei die Empfangseinheit für den Identifikationscode mindestens einen zum Empfang eines über Funkwellen oder Infrarotwellen ausgestrahlten Code eines Identifikations-Codesenders (1) befähigten Identifikations-Codeempfänger (3) aufweist, an dessen Eingänge seiner zentralen logischen Steuereinheit (4); der Ausgang eines den bestimmten Richtungswinkel der waagerechten Projektion der ausgezeichneten Richtungsachse in ein entsprechendes elektrisches Signal umwandelnden Kompasses (26); und der Ausgang eines Neigungswinkeldetektors (27), der den bestimmten Winkel, den die ausgezeichnete Richtungsachse mit der Waagerechten oder Senkrechten bildet, in ein entsprechendes elektrisches Signal umwandelt, angeschlossen sind.

## Beschreibung

Die Erfindung betrifft einen lage- und raumrichtungsabhängigen mobilen elektronischen Informationsgeber, insbesondere für Informationssysteme in Ausstellungen oder für Verkehrsinformationssysteme, ggf. mit mit Kabeln angeschlossenen Teileinheiten, der aufweist; eine Empfangseinheit für den Identifikationscode mit einer ausgezeichneten Richtungsachse; einen Speicher für die Speicherung einer codierten audiovisuellen Information; eine akustische Tonwiedergabeeinheit, die über eine gesteuerte Tonmischanlage mit dem Ausgang des Speichers verbunden ist; eine mit ihrem Eingang am Ausgang der Empfangseinheit für den Identifikationscode angeschlossene zentrale logische Steuereinheit, die entsprechend dem in die Empfangseinheit für den Identifikationscode eingegebenen Identifikationscode eine codierte audiovisuelle Information auswählt und über ihre Ausgänge an die Eingänge der gesteuerten Tonmischanlage und des Speichers zur Steuerung der Mechanik angeschlossen ist, wobei der Ausgang des Speichers für die Steuerung der Mechanik am Eingang des Speichers angeschlossen ist.

Sie bezieht sich also auf einen lage- und raumrichtungsabhängigen mobilen elektronischen Informationsgeber, speziell für Informationssysteme bei Ausstellungen oder für Verkehrsinformationssysteme.

Nach dem Stand der Technik werden von mehreren Unternehmen herkömmliche, in Ausstellungen zu Führungen geeignete Tonträgergeräte hergestellt bzw. verwendet. Beim bisherigen Einsatz dieser Geräte haben sich verschiedene Erfordernisse ergeben, die Benutzer haben; es ist auch bekannt, welche Mängel Besucher veranlassen, auf eine Führung unter Einsatz dieser Geräte zu verzichten.

Bei Führungen in Ausstellungen steht dem interessierten Besucher meist ein tragbares Tonbandgerät zur Verfügung. Durch die Reihenfolge der vom Gerät wiedergegehenen Informationen ist der Besucher zum Rundgang in festgelegter Reihenfolge und zur Einhaltung einer vorbestimmten Fortbewegungsvorschrift gezwungen.

Die bekannten Geräte lösen das Problem der Führung in einer Ausstellung im Prinzip in ähnlicher Weise. Die Ausstellungsfläche wird in Zonen aufgeteilt, in denen die Information zyklisch wiederholt wird. Die für die jeweilige Zone bestimmte Information erreicht den Besucher durch Infrarotstrahlen oder Funkwellen. Dies schränkt die Bewegungsfreiheit des Besuchers in der jeweiligen Zone ein. Die gegenwärtig angebotenen Systeme können deshalb die Erwartungen der Besucher nicht in vollem Maße erfüllen.

Außer den oben geschilderten Systemen gibt es noch audiovisuelle Systeme, die Informationen über die Ausstellung auf einen Bildschirm oder Tableau mit automatischer Wiederholung oder gemäß einem vom Besucher veranlaßten Startvorgang schreiben. Sie sind in einigen Fällen mit einem Kopfhörer-Dolmetscher-System mit Infrarot- oder Funkwellen-Übertragung kombiniert. Auch diese Systeme weisen die oben beschriebenen Mängel auf.

Die gegenwärtig gebräuchlichen Ausstellungs-Führungssysteme sind nicht mobil, sondern ortsgebunden konstruiert. Im allgemeinen können die dazugehörenden Geräte und das gespeicherte Informationsmaterial nicht an anderen Orten verwendet werden. Sie erfordern aufwendige Investitionen, ihre Inbetriebnahme zwingt den Anwender zu zahlreichen Konstruktionsänderungen. Wegen des hohen Aufwands ist ihre Verbreitung begrenzt. Wegen ihrer Kompliziertheit kann ihre Inbetriebhaltung, Instandhaltung und Fehlereingrenzung nur von speziellem Fachpersonal durchgeführt werden, das im allgemeinen dazu eigens anreisen muß.

Es ist somit Aufgabe der Erfindung, ein Informationssystem zu schaffen, das in Ausstellungen, Museen und sonstigen Sehenswürdigkeiten dazu geeignet ist, die sich dort bewegenden Besucher und/oder Gruppen mit kulturellen oder allgemein interessierenden Informationen über in der jeweiligen Bewegungszone befindlichen Gegenstände und/oder Sehenswürdigkeiten, in verschiedenen Sprachen, in von den Personen und/oder Gruppen selbst bestimmter beliebiger Reihenfolge und Fortbewegungstempo zu versorgen, ohne die Umgebung zu stören. Eine weitere Zielsetzung der Erfindung ist die Verwirklichung einer Ausgestaltung, die durch ihr Konstruktionsprinzip bedingt, die Anwender - Museen, Ausstellungen, sonstige Sehenswürdigkeiten - weder zu aufwendigen Investitionen, noch zu größeren strukturellen oder logischen Änderungen der Ausstellung zwingt.

Eine weitere Zielsetzung: Der Informationsgeber soll bei geeigneter Gestaltung auch als Verkehrsinformationsgeber für Fahrzeuge auf Grundlage des oben beschriebenen Funktionsprinzips einsetzbar sein.

Weitere Zielsetzungen sind ferner folgende Möglichkeiten:
- die Verfolgung einer ausgewählten Wegstrecke auf einem großflächigen Ausstellungsgelände;
- die Befriedigung der Wünsche von Besuchern mit selektiven Interessen;
- die Befriedigung der Wünsche von Besuchern, die weniger Zeit haben;
- Lösungsfindung für die Informationsabgabe an Gruppen;
- Zur-Verfügung-Stellen von Informationsmaterial in mehreren Sprachen;
- Option für den Gebrauch in einer Sprache nach Wunsch; und
- Option für den Gebrauch des Geräts als Taschenrechner.

Die Aufgabe wird erfindungsgemäß gelöst durch einen lage- und raumrichtungsabhängiger mobiler elektronischer Informationsgeber, wobei die Empfangseinheit für den Identifikationscode mindestens einen zum Empfang eines über Funkwellen oder Infrarotwellen ausgestrahlten Code eines Identifikations-Codesenders befähigten Identifikations-Codeempfänger aufweist, an dessen Eingänge seiner zentralen logischen Steuereinheit, der Ausgang eines den bestimmten Richtungswinkel der waagerechten Projektion der ausgezeichneten Richtungsachse in ein entsprechendes elektrisches Signal umwandelnden Kompasses, und der Ausgang eines Neigungswinkeldetektors, der den bestimmten Winkel, den die ausgezeichnete Richtungsachse mit der Waagerechten oder Senkrechten bildet, in ein entsprechendes elektrisches Signal umwandelt, angeschlossen sind.

Vorteilhafte Weiterbildungen ergeben sich aus den Unteransprüchen, auf die vollinhaltlich Bezug genommen wird.

Erfindungsgemäß wird also ein Informationssystem geschaffen, das es sogar ermöglicht, eine vorgegebene Informationsmenge in der zum erfindungsgemäßen Informationsgeber passenden, kompatiblen Form in den Handelsverkehr zu bringen.

Die Erfindung beruht auf der Erkenntnis, daß in Ausstellungen, Museen und sonstigen Sehenswürdigkeiten die Aussteller der gezeigten Gegenstände oder die ausgestellten Ausstellungsobjekte selbst mit einem bestimmten Registriercode versehen sind, der an auffallenden, sichtbaren Stellen auch für die Besucher lesbar ausgehängt ist. Dies ist besonders für sehr wertvolle Ausstellungsgegenstände charakteristisch. In vielen Fällen wird außerdem, parallel dazu, auch ein Strich-Code zur Identifikation verwendet, der auch leicht in der Nähe des Ausstellungsobjekts nachträglich angebracht werden kann.

Alle diese, ferner die für andere Zwecke bereits häufig verwendeten Infrarot- bzw. Funk-Signalgeber sind zur Identifikation verschiedener Ausstellungsobjekte bzw. Ausstellungsgegenstände geeignet. Außerdem können an einem durch Signalgeber identifizierten Ort zahlreiche andere Details identifiziert werden, z. B. die einzelnen Ausstellungsobjekte in einer Ausstellungshalle, wenn die Auswahl durch gemeinsame Registrierung des Signals eines saalidentifizierenden Signalgebers und eines Richtungsmeßsignals eines leicht ausrichtbaren Hand-Zeigegeräts geschieht. Dazu ist selbstverständlich ein Datenbestand erforderlich, der auf der vorhergehenden Vermessung der örtlichen Verhältnisse basiert.

Die Erkenntnis wird ferner dadurch gestützt, daß die erwähnten Identifikationscodes bei den meisten Ausstellern bereits vorhanden sind, bzw. nachträglich leicht angebracht werden können.

Schließlich können, auf Grundlage desselben Prinzips mit Hilfe des oben beschriebenen, mit Lagesensor und Richtungsselektor ausgestatteten Informationsgeber dem Benutzer auch nützliche, auswählbare Verkehrsinformationen zugänglich gemacht werden.

Auf Grund dieser Erkenntnisse ist der diese Zielsetzung verwirklichende lage- und raumrichtungsabhängige mobile elektronische Informationsgeber in seiner allgemeinsten Definition dadurch charakterisiert, daß er - oder zumindest seine mit einem flexiblen Kabel angeschlossene Teileinheit - über eine ausgezeichnete Richtungsachse verfügt, ferner umfaßt der Informationsgeber eine Empfangseinheit für den Identifikationscode, einen Speicher für die kodierte audiovisuelle Information, eine an den Ausgang des Speichers über eine gesteuerte Tonmischanlage angeschlossene akustische Tonwiedergabeeinheit, eine mit ihrem Eingang am Ausgang der Empfangseinheit für den Identifikationscode angeschlossenen zentralen logischen Steuereinheit, die auf Grund des Ausgangscodes der Empfangseinheit den Identifikationscode wählt, die Ausgänge der Zentralsteuerung sind an die Eingänge der gesteuerten Tonmischanlage und des Datenspeichers für die Steuerung der Mechanik angeschlossen, während der Ausgang des Speichers für die Steuerung der Mechanik mit dem Eingang des Speicher verbunden ist.

Erfindungsgemäß umfaßt eine Empfangseinheit für den Identifikationscode mindestens einen Identifikations-Codeempfänger, der die Infrarot oder über Funk ausgestrahlten Identifikations-Codesignale des Identifikations-Codesenders empfangen kann, außerdem sind an die Eingänge seiner zentralen logischen Steuerungseinheit die Ausgänge zweier Winkelmeßgeräte angeschlossen.

Das erste Winkelmeßgerät mißt mit einem Kompaß den Richtungswinkel der waagerechten Projektion der ausgezeichneten Richtungsachse, das zweite mit einem Neigungsdetektor den Neigungswinkel, den die ausgezeichnete Richtungsachse mit der Waagerechten oder Senkrechten einschließt. Die so gemessenen Winkel werden in Form geeigneter elektrischer Signale der zentralen logischen Steuereinheit übermittelt.

Nachfolgend wird die Erfindung anhand eines bevorzugten Ausführungsbeispiels, auf das die Erfindung keineswegs beschränkt ist, anhand der begleitenden Zeichnung näher erläutert. Dabei zeigt:

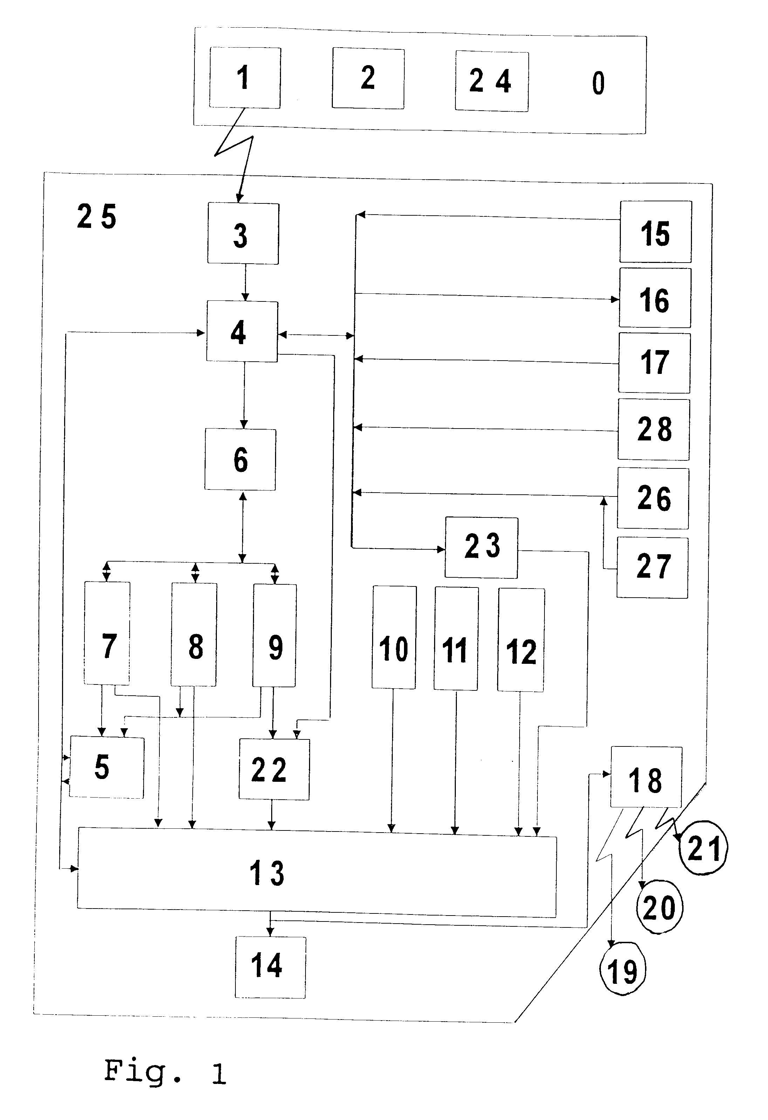

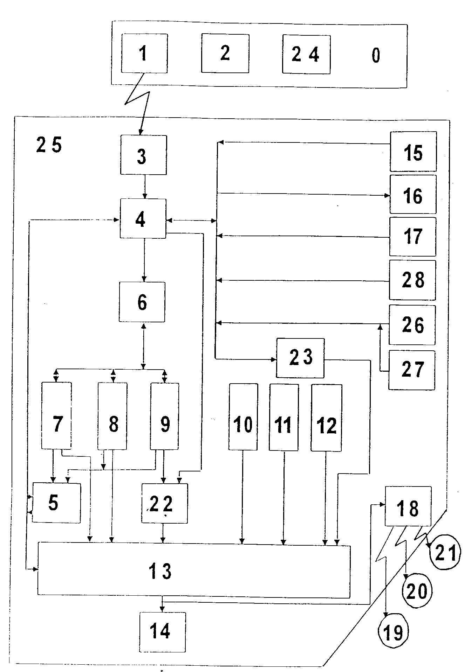

- Fig. 1: als Blockskizze die Schaltanordnung eines Ausführungsbeispiels der Erfindung.

Anhand dieser Fig. 1 wird nachfolgend die Erfindung in einer Ausführungsform für Museen, Ausstellungen, also bei Präsentation verschiedener Ausstellungsobjekte in einem geschlossenen Raum, erläutert.

Hier setzt sich das vom Informationsgeber als Ziel anvisierte Objekt aus mehreren Ausstellungsobjekten 0 zusammen. Diese können auf die übliche Art frei oder in Schaukästen präsentierte beliebige Gegenstände sein. Wesentlich ist, daß diese mit einem alphanumerischen Identifikationscode in geschriebener Form 2 und/oder mit einem Identifikations-Strichcode 24 versehen sind. Sicherlich erhalten z. B. die wertvolleren Ausstellungsobjekte o darüber hinaus auch einen Identifikations-Codesender 1, der von diesem ausgestrahlte Code ist zur eindeutigen Identifikation des Ausstellungsobjektes 0 geeignet.

Der erfindungsgemäße Informationsgeber 25 ist bei dieser Ausführungsform ein tragbares Handgerät, ausgestattet mit einer Tastatur 15 zur manuellen Eingabe des alphanumerischen Identifikationscodes 2.

Zum Identifikations-Strichcode 24 paßt der Identifikations-Strichcodeleser 17. Den vom Identifikations-Codesender 1 Infrarot oder über Funkwellen ausgestrahlten Code empfängt das Gerät zweckmäßigerweise automatisch über den Identifikations-Codeempfänger 3. Die Steuerung des Informationsgebers 25 erfolgt über die zentrale logische Steuereinheit 4. An die zentrale logische Steuereinheit 4 angeschlossen sind: der Identifikations-Codeempfänger 3, die Tastatur 15, der Identifikations-Strichcodeleser 17 und ein Display 16, z.B. ein LCD-Display. Die drei letztgenannten Elemente gehören als Peripherie-Block zum Gerät. An die zentrale logische Steuereinheit 4 ist ferner angeschlossen: ein Service-Sprach-Generator 23 sowie die wichtigen Kontruktionselemente des Erfindung: der Kompaß 26, der Neigungswinkel-Detektor 27 und die Zeitmeßeinheit 28. Schließlich sind an die zentrale logische Steuereinheit 4 angeschlossen: eine gesteuerte Tonmischanlage 13, ein weiterer Sprach-Generator 22, ein binärer Datenleser 5 und ein Speicher für die Steuerung der Mechanik 6. Die zentrale logische Steuereinheit 4 ist hier ein Stromkreis mit Eingängen für digitale elektrische Signale und Ausgängen für digitale Steuerung.

Die zentrale logische Steuereinheit 4 kann ein Universal-Mikroprozessor oder eine programmierte logische Anordnung (PLA) sein, die die Identifikationscodes und die später noch zu erläuternden gemessenen Richtungsdaten entsprechend dem Speicher für die Steuerung der Mechanik 6 an bestimmte Adressen übermittelt.

Als Träger der für den Benutzer (z. B. Museums Besucher) bestimmten Informationen dient ein Magnetband-Aufzeichnungs-/Wiedergabegerät 7 und/oder ein optisches oder Magnetplatten-Aufzeichnungs-/Wiedergabegerät 8 und/oder eine CD-ROM-Einheit 9. Diese bilden, angeschlossen an den Ausgang des Speichers für die Steuerung der Mechanik 6, gemeinsam oder alternativ einen Speicher, dessen Ausgang mit dem Eingang der gesteuerten Tonmischanlage 13 verbunden ist.

Um sicherzustellen, daß während der Führung oder dem sonstigen informationsliefernden Einsatz parallel auch herkömmliche Unterhaltungselektronik in Anspruch genommen werden kann, kann der Informationsgeber 25 wahlweise mit einem Standard-Tonbandgerät 10 und/oder einem Standard CD-Abspielgerät 11 und/oder einem Standard-Funkempfänger 12 ausgestatten sein. Die Ausgänge des Magnetband-Aufzeichnungs-/Wiedergabegeräts 7, des optischen oder Magnetplatten-Aufzeichnungs-/Wiedergabegerätes 8, des Standard-Tonbandgeräts 10 und/oder des StandardCD-Abspielgerätes 11, des Standard-Funkempfängers 12, sowie des Service-Sprach-Generators 23 sind unmittelbar an die gesteuerte Tonmischanlage 13 angeschlossen. Im Beispiel ist die CD-ROM-Einheit 9 über einen Sprach-Generator 22 an die gesteuerte Tonmischanlage 13 angeschlossen. Die Ausgänge des Magnetband-Aufzeichnungs-/Wiedergabegeräts 7 und/oder des optischen oder Magnetplatten-Aufzeichnungs-/Wiedergabegeräts 8 und/oder der binäre Datenausgang der CD-ROM-Einheit 9 sind an den binären Datenleser 5 angeschlossen. Der Ausgang der gesteuerten Tonmischanlage 13 ist an das Tonwiedergabegerät 14 und ggf. an den Infrarot/Funksender 18 angeschlossen.

Der Informationsgeber 25 [oder zumindest eine seiner mit einem flexiblen Kabel angeschlossenen Teileinheiten] hat eine ausgezeichnete Richtung, die zweckmäßigerweise mit der Längsachse seiner in länglicher Form gestalteten Außenverkleidung zusammenfällt. Die in diesem Sinne zweckmäßige äußere Formgebung ist ähnlich wie die der Fernbedienung üblicher, unterhaltungselektronischer Geräte und ermöglicht durch einen durch seine Form eindeutig die ausgezeichnete Richtung suggerierenden, handlichen, kleinen Handapparat eine bequeme Handhabung. Da der Handapparat zweckmäßigerweise möglichst klein sein sollte, kann, sofern der Informationsgeber 25 mit all seinen Ergänzungselementen größere Ausmaße hat, der in die Hand zu nehmende Teil, mit dem in bestimmte Richtungen gezielt wird, abgetrennt und mit einem flexiblen Kabel 25 angeschlossen sein.

Der Informationsgeber 25 arbeitet wie folgt:

Die Lagebestimmung geschieht auf Grund der Daten der Empfangseinheit für den Identifikationscode, nämlich des Identifikations-Codeempfängers 3 und/oder der Tastatur 15 und/oder des Identifikations-Strichcodelesers 17 unter Mitwirkung der zentralen logischen Steuereinheit 4. Das Erkennen des Identifikationscodes auf einem dieser Wege bedeutet eigentlich schon die Lagebestimmung, da der Code dem Saal, dem Objektensemble oder dem Einzelobjekt selbst zugeordnet ist.

Bei Beginn der Wiedergabe der für den Benutzer bestimmten Information vom Tonträger im Speicher erscheint auf dem Informationsausgang des Magnetband-Aufzeichnungs-/Wiedergabegeräts 7 und/oder des optischen oder Magnetplatten-Aufzeichnungs/Wiedergabegeräts 8 und/oder der CD-ROM-Einheit 9 in binärer Tabellenform die Adresse der dem jeweiligen Identifikationscode (festgestellt durch Identifikation 2 und/oder durch den Identifikations-Codesender 1 und/oder durch den Identifikations-Strichcode) zugeordneten Information auf dem Tonträger. Dabei kann die Adresse die Rillen- oder Sektornummer, Bandspulen-Umdrehungszahl oder ähnliches sein. Die zentrale logische Steuereinheit 4 verarbeitet die eingehenden Informationen aus dem Identifikationscode 2 und/oder von dem Identifikations-Codesender 1 ausgestrahlten Code und/oder aus dem Identifikations-Strichcode 24 des elektrischen Signalumformer des Kompasses 26 und des Neigungswinkeldetektors und ermittelt daraus die Adresse der dem jeweiligen Code zugeordneten Information und betätigt über den Speicher für die Steuerung der Mechanik 6 das Magnetband-Aufzeichnungs-/Wiedergabegerät 7 oder das optische / Magnetband-Aufzeichnungs/Wiedergabegerät 8 oder die CD-ROM-Einheit 9 so, daß diese immer die dem aktuellen, durch den alphanumerischen Code 2 und/oder durch den Identifikations-Codesender 1 und/oder durch den Identifikations-Strichcode festgestellten Code zugeordnete Information an die gesteuerte Tonmischanlage 13 liefern.

Die Steuerung des Betriebes der Tonmischanlage 13, des Sprach-Generators 22, des binären Datenlesers 5 und des Service-Sprach-Generators 23 erfolgt ebenfalls durch die zentrale logische Steuereinheit 4. Erfindungsgemäß wird eine raumrichtungsabhängige Wahlmöglichkeit bei der Informationsanforderung dadurch geschaffen, daß der Benutzer die ausgezeichnete Richtungsachse des Informationsgebers 25 auf den fraglichen Gegenstand, z. B. das Ausstellungsobjekt 0, richtet. In Anbetracht des Umstandes, daß bei dichter richtungsmäßiger Aufteilung des Raumes das Ausstellungsobjekt 0 durch eine ausgewählte Raumrichtung nur bei genauer Kenntnis des eigenen Standortes bestimmt wird, können in jedem Ausstellungssaal bestimmte "Wählplätze" markiert werden. Wenn der Benutzer des Informationsgebers hier steht, kann er durch die Richtungswahl Informationen über das anvisierte Ausstellungsobjekt 0 erhalten.

Er kann die Information über die ausgewählte Richtung, z. B. durch einen Tastendruck auf der Tastatur 15 abrufen. Dann werden die vom Kompaß 26 und vom Neigungswinkeldetektor 27 gelieferten, horizontalen und vertikalen Richtungsdaten, sowie die Lagedaten [geliefert durch den alphanumerischen Identifikationscode 2, den Identifikations-Strichcode 24 oder den Identifikations-Codesender 1] die im Speicher gespeicherte, einschlägige Information adressieren, die den Benutzer z. B. durch das akustische Tonwiedergabegerät 14 erreicht.

Der Kompaß 26 erfaßt die auf die waagerechte Ebene bezogene Kreisrichtung, der Informationsgeber 25 oder seine mit einem flexiblen Kabel angeschlossene Teileinheit erfaßt den Richtungswinkel der waagerechten Projektion der ausgezeichneten Richtungsachse und wandelt die erhaltenen Daten mittels eines geeigneten Wandlers in elektrische Signale um. Der Neigungswinkeldetektor 27 stellt den Winkel fest, den die Längsachse des Informationsgebers 25 bzw. dessen ausgezeichnete Richtungsachse mit der Waagerechten bzw. dem Ergänzungswinkel entsprechend mit der Senkrechten einschließt. Einfachere Instrumente für diesen Zweck arbeiten mit ruhenden Flüssigkeitsoberflächen oder nach dem Gravitationsprinzip mit einem in Flüssigkeit schwimmenden Körper mit inhomogener Massen-Verteilung; komplizierter sind gyroskopartige Instrumente auf der Grundlage des Rotationsprinzips. Auch diese verwandeln die Information über den festgestellten Neigungswinkel in ein elektrisches Signal, zweckmäßigerweise in digitaler Form.

Die Zeitmeßeinheit 28 kann als Instrument zur Identifikation von Tageszeiten oder Kalendertagen dienen und die Auswahl der gerade aktuellen Informationen aus dem Speicher ermöglichen.

Der Service-Sprach-Generator 23 und das Display 16 bieten dem Benutzer audiovisuelle Informationen über den Betriebszustand des Informationsgebers 25 oder über die Bewegungsrichtung, wenn ein ausgewähltes Ausstellungsobjekt 0 auf einem großflächigen Ausstellungsgelände aufgefunden werden soll. In letzterem Fall kann die Auswahl durch Eintippen des im Ausstellungskatalog aufgeführten, dem Ausstellungsobjekt 0 zugeordneten Identifikations-Codes 2 über die Tastatur 15 erfolgen, ebenso die Aktivierung der Information über die einzuhaltende Bewegungsrichtung, die von der zentralen logischen Steuereinheit 4 durchgeführt wird. Die von dem Infrarot/Funksender 18 ausgestrahlte Information wird durch die Gruppenempfänger 19, 20, 21 an die einzelnen Gruppenmitglieder weitergeleitet. Ausschließliche Funktion der Gruppenempfänger 19, 20, 21 ist das Näherbringen des audiovisuelle oder evtl. Textinformationen vermittelnden Infomrationsgebers zum Benutzer, um Störungen anderer zu vermeiden. So werden der Infrarot/Funksender 18 und die Gruppenempfänger 19, 20, 21, bei den einzelnen Gruppenmitgliedern als drahtlose Leitungsverlängerung eingesetzt.

Durch die Kombination des binären Datenlesers 5 und/oder des optischen oder Magnetplatten-Aufzeichnungs-/Wiedergabegerätes 8 und/oder der CD-ROM-Einheit 9, der Tastatur 15, der zentralen logischen Steuereinheit 4 und des Displays 16 entsteht ein dynamisch auffüllbares Wörterbuch mit veränderbarer, nach Wahl einstellbarer Sprache. Durch die Verwendung der CD-ROM-Einheit 9 und des Sprach-Generators 22, ergänzt durch die gesteuerte Tonmischanlage 13 und das akustische Tonwiedergabegerät 14, kann ein "sprechendes Wörterbuch" realisiert werden.

Durch die Tastatur 15 und das Display 16 kann der Informationsgeber 25 auch mit einer Taschenrechnerfunktion ergänzt werden.

Die Lautstärke-Regelung der ausgewählten Information erfolgt über die gesteuerte Tonmischanlage 13. Die Lautstärke kann entspechend der Wichtigkeit der gelieferten Information variiert werden.

Der Informationsgeber 25 der hier geschilderten Ausführungsform kann ein Gerät in der Form eines Handapparates sein. Es ist aber auch eine andere, in ein Fahrzeug, meistens in ein Kraftfahrzeug, montierte erfindungsgemäße Ausführungsform, entsprechend dem anderen bedeutenden Anwendungsgebiet der Erfindung, möglich. Im wesentlichen handelt es sich auch hierbei um ein mobiles Gerät, das die Orts- und Richtungsänderungen des Fahrzeugs registriert, sowie ggf. die relativ zum Fahrzeug wählbaren Richtungen angibt. Bei dieser Ausführungsform reduziert sich die Raumrichtungsfeststellung auf die Richtungsmessung in der waagerechten Ebene durch den Kompaß 26, der Neigungswinkeldetektor 27 ist nicht erforderlich. Analog dazu ist auch der Identifikations-Strichcodeleser 17 sowie der als drahtlose Leitungsverlängerung wirkende Infrarot/Funksender 18 mit den Gruppenempfängern 19, 20, 21 überflüssig. Selbstverständlich gibt es anstelle des Ausstellungsobjektes 0 mehrere, einzeln mit Identifikations-Codesendern 1 ausgestattete Objekte. Diese können Bestandteil der Straße oder der Schienenstrecke sein oder irgendein in der Nähe der Verkehrsstrecke gelegenes Objekt. Mit Hilfe des empfangsnahen - oder falls mehrere vorhanden, des nächstgelegenen - Codesenders registriert der Informationsgeber 25 die eigene Position, damit auch die Position des Trägerfahrzeuges und gibt diese als Information weiter.

Über die Feststellung der eigenen Standortposition hinaus können auch aktuelle, sich zeitlich ändernde oder zeitabhängige Informationen übermittelt werden. So können z. B. zeitweilige Verbote, Umleitungen, momentane oder erwartete Stauungen oder Wartezeiten den Reisenden mitgeteilt werden. Durch die Positionsfeststellung und die gleichzeitige, auf die waagerechte Ebene bezogene Richtungsmessung kann, durch die Verfolgung der gegebenen Fahrstrecke, das vom Fahrzeug erreichbare Ziel, z. B. die nächste Ortschaft oder in Städten der nächste größere Verkehrsknotenpunkt bestimmt werden. Die Richtungswahl über die 360 Grad ermöglicht vorherige Überlegungen und somit die Festlegung der zu verfolgenden Richtung. Ferner gibt es auch hier die Möglichkeit, Reisenden über die fremdenverkehrsmäßig bedeutenden Sehenswürdigkeiten (Gebäude, Denkmäler usw.) zu informieren.

Ein weiters Anwendungsgebiet der Erfindung kann bei Verwendung einer genaueren Uhr, anstelle der Zeitmeßeinheit, erschlossen werden. Dabei kann ein Vorführteleskop für Demonstrationszwecke konstruiert werden, das audiovisuelle Informationen über Himmelsobjekte liefert, auf die das Teleskop ausgerichtet ist. Durch die genauere Uhr kann die scheinbare Bewegung des Himmels, die sich aus der Erddrehung ergibt, berücksichtigt werden. Ein Vorteil dieser Lösung ist, daß bereits installierte Teleskope nachträglich mit diesem Ergänzungsgerät ausgerüstet werden können.

Die durch die Erfindung eröffneten Möglichkeiten auf dem Gebiet der Informationsversorgung sind sehr vielfältig und können für die Besucher von Museen, Ausstellungen, Kirchen usw.; oder auch Personen die am Verkehr an öffentlichen Straßen, in Stadtteilen, an U-Bahn-Haltestellen, in Bahnhöfen teilnehmen; den Beschäftigten in Fabriken, an Montagebändern; Sehbehinderten, die eine Führung brauchen; den Besuchern von Demonstrations-Sternwarten nützlich sein.

Obwohl die Erfindung anhand eines bevorzugten Ausführungsbeispiels erläutert wurde, sind dem Fachmann Abwandlungen und Änderungen ohne weiteres ersichtlich, die ebenfalls unter den Schutzumfang der Ansprüche fallen. Diese ist daher keineswegs auf die beschriebene Ausführungsform beschränkt.

## Patentansprüche

1. Lage- und raumrichtungsabhängiger mobiler elektronischer Informationsgeber, insbesondere für Informationssysteme in Ausstellungen oder für Verkehrsinformationssysteme, ggf. mit Kabeln angeschlossenen Teileinheiten, der aufweist:
- eine Empfangseinheit für den Identifikationscode mit einer ausgezeichneten Richtungsachse;
- einen Speicher für die Speicherung einer codierten audiovisuellen Information;
- eine akustische Tonwiedergabeeinheit, die über eine gesteuerte Tonmischanlage mit dem Ausgang des Speichers verbunden ist;
- eine mit ihrem Eingang am Ausgang der Empfangseinheit für den Identifikationscode angeschlossene zentrale logische Steuereinheit, die entsprechend dem in die Empfangseinheit für den Identifikationscode eingegebenen Identifikationscode eine codierte audiovisuelle Information auswählt und über ihre Ausgänge an die Eingänge der gesteuerten Tonmischanlage und des Speichers für die Steuerung der Mechanik angeschlossen ist, wobei der Ausgang des Speichers zur Steuerung der Mechanik am Eingang des Speichers angeschlossen ist;
dadurch gekennzeichnet, daß
- die Empfangseinheit für den Identifikationscode mindestens einen zum Empfang eines über Funkwellen oder Infrarotwellen ausgestrahlten Code eines Identifikations-Codesenders (1) befähigten Identifikations-Codeempfänger (3) aufweist, an dessen Eingänge seiner zentralen logischen Steuereinheit (4);
- der Ausgang eines den bestimmten Richtungswinkel der waagerechten Projektion der ausgezeichneten Richtungsachse in ein entsprechendes elektrisches Signal umwandelnden Kompasses (26); und
- der Ausgang eines Neigungswinkeldetektors (27), der den bestimmten Winkel, den die ausgezeichnete Richtungsachse mit der Waagerechten oder Senkrechten bildet, in ein entsprechendes elektrisches Signal umwandelt, angeschlossen sind.

2. Informationsgeber nach Anspruch 1, gekennzeichnet durch eine Außenverkleidung in länglicher Form, wobei die ausgezeichnete Achse des Informationsgebers mit der Längsachse der länglichen Außenverkleidung im wesentlichen parallel ist.

3. Informationsgeber nach Anspruch 1 oder 2 , dadurch gekennzeichnet, daß seine Empfangseinheit für den Identifikationscode auch einen Identifikations-Strichcodeleser (17) aufweist.

4. Informationsgeber nach einem der vorangehenden Ansprüche, dadurch gekennzeichnet, daß seine Empfangseinheit für den Identifikationscode eine Tastatur (15) aufweist.

5. Informationsgeber nach einem der Ansprüche 1 bis 4, dadurch gekennzeichnet, daß sein Speicher für die Speicherung einer codierten audiovisuellen Information ein Magnetband-Aufzeichnungs-/Wiedergabegerät (7) aufweist.

6. Informationsgeber nach einem der Ansprüche 1 bis 5, dadurch gekennzeichnet, daß sein Speicher für die Speicherung einer codierten audiovisuellen Information ein optisches Wiedergabegerät oder Magnetplatten-Aufzeichnungs-/Wiedergabegerät (8) aufweist.

7. Informationsgeber nach einem der Ansprüche 1 bis 6, dadurch gekennzeichnet, daß sein Speicher für die Speicherung einer codierten audiovisuellen Information ein CD-ROM-Abspielgerät (9) aufweist.

8. Informationsgeber nach einem der Ansprüche 1 bis 7, dadurch gekennzeichnet, daß er einen Infrarot/Funksender (18) geringer Reichweite für Gruppen-Empfänger (19), (20), (21) in geringer Entfernung aufweist und das Eingangssignal des akustischen Tonwiedergabegeräts (14) auf den Modulationseingang des Infrarot/Funksenders (18) geleitet wird.

9. Informationsgeber nach einem der Ansprüche 1 bis 8, dadurch gekennzeichnet, daß er in ein Fahrzeug eingebaut ist.

10. Informationsgeber nach einem der Ansprüch 1 bis 8, dadurch gekennzeichnet, daß er in ein astronomisches Teleskop eingebaut ist.
